Europäisches Patentamt

European Patent Office

Office européen des brevets

(19)

(11) Veröffentlichungsnummer: **0 037 550**
**B1**

(12) **EUROPÄISCHE PATENTSCHRIFT**

(45) Veröffentlichungstag der Patentschrift:
**11.07.84**

(21) Anmeldenummer: **81102410.8**

(22) Anmeldetag: **31.03.81**

(51) Int. Cl.³: **A 01 K 63/04**

(54) Gehäuse für Aquarienfilter.

(30) Priorität: **09.04.80 DE 3013624**

(43) Veröffentlichungstag der Anmeldung:
**14.10.81 Patentblatt 81/41**

(45) Bekanntmachung des Hinweises auf die Patenterteilung:
**11.07.84 Patentblatt 84/28**

(84) Benannte Vertragsstaaten:
**AT BE CH DE FR GB IT LI LU NL SE**

(56) Entgegenhaltungen:
**DE - A - 1 942 548**
**DE - A - 2 360 539**
**DE - A - 2 458 667**
**GB - A - 652 209**
**LU - A - 81 871**
**US - A - 2 707 611**
**US - A - 4 081 377**

(73) Patentinhaber: **Tetra Werke Dr.rer.nat. Ulrich Baensch GmbH, Herrenteich 78, D-4520 Melle 1 (DE)**

(72) Erfinder: **Panthöfer, Rudolf, Menden Keplerstrasse 24, D-5205 St. Augustin 3 (DE)**

(74) Vertreter: **Depmeyer, Lothar, Auf der Höchte 30, D-3008 Garbsen 1 (DE)**

## Beschreibung

Die Erfindung betrifft ein Gehäuse für Aquarienfilter, das druckfest ausgeführt und mit einem lösbar angebrachten Deckel versehen ist, der einen ihn umschliessenden Ring (Druckring) aufweist, welcher gegenüber dem Gehäuseunterteil verdrehbar ist und durch Verdrehen mittels Schrägflächen zur Erzielung eines Dichtungsdruckes eine Axialbewegung des Deckels bewirkt.

Es sind Gehäuse für Aquarienfilter bekannt (DE-A-2 360539), die druckfest ausgeführt und mit einem lösbar angeordneten Deckel versehen sind. Zudem sind aber auch Filtergehäuse bekannt (GB-A-656 209, US-A-2 707 611), bei denen ihr Deckel oder ein ihn umschliessender Ring gegenüber dem Gehäuseunterteil verdrehbar und durch Verdrehen mittels Schrägflächen zur Erzielung eines Dichtungsdruckes eine Axialbewegung erreichbar ist.

Da Filter der eingangs erwähnten Art im Regelfalle ausserhalb des Aquariums verwendet werden, muss bei ihrer Ausbildung und Handhabung eine besondere Sorgfalt aufgewendet werden; im Schadensfalle kann nämlich der Inhalt des Aquariums über die ausserhalb angeordneten Leitungen und Gefässe auslaufen. Die Erfindung strebt daher ein Gehäuse für Aquarienfilter an, das sicher geschlossen, aber auch zum Zwecke der Reinigung und dgl. geöffnet werden kann, und zwar auch von solchen Personen, die ungeübt sind. Zugleich soll ein ausreichender Dichtungsdruck ohne grosse Kraftanstrengung und weiterhin erreicht werden, dass Unbefugte den Deckelverschluss nicht öffnen können.

Diese Aufgabe wird nach der Erfindung dadurch gelöst, dass nunmehr der Ring mit einer Verzahnung versehen ist, in die ein Ritzel eingreift, das auswechselbar, leicht lösbar und mit einer Handhabe ausgestattet ist.

Ritzel und Verzahnungen machen dabei kleine Betätigungskräfte ausreichend, um einen genügend grossen Dichtungsdruck zu erzielen; da das Ritzel leicht entfernbar ist, kann es getrennt vom Aquarienfilter aufbewahrt werden, um so eine unerwünschte Betätigung des Gehäuseverschlusses auszuschliessen.

Darüber hinaus wird vorgeschlagen, zusätzlich zu den den Dichtungsdruck erzeugenden Schrägflächen Schrägflächen vorzusehen, die zum Abheben des Deckels dienen. Somit kann mit Hilfe der Verzahnung und des Ritzels auch ein Abheben des Deckels erreicht werden, wenn aus irgendwelchen Gründen der Deckel am Gehäuse anhaften sollte, was z.B. bei bestimmten Dichtungsringen eintreten kann.

Weitere Einzelheiten der Erfindung werden anhand der Zeichnung erläutert, in der ein vorzugsweise zur Anwendung kommendes Ausführungsbeispiel dargestellt ist.

Es zeigen:

Fig. 1 einen senkrechten Teilschnitt durch das Oberteil des Gehäuses für einen Aussenfilter zur Verwendung bei Aquarien bzw. Zierteichen,

Fig. 2 eine Tailaufsicht auf das Gehäuse gemäss Fig. 1 und

Fig. 3 einen Teilschnitt durch den Aussenrahmen für das Gehäuse nach Fig. 2 und 2.

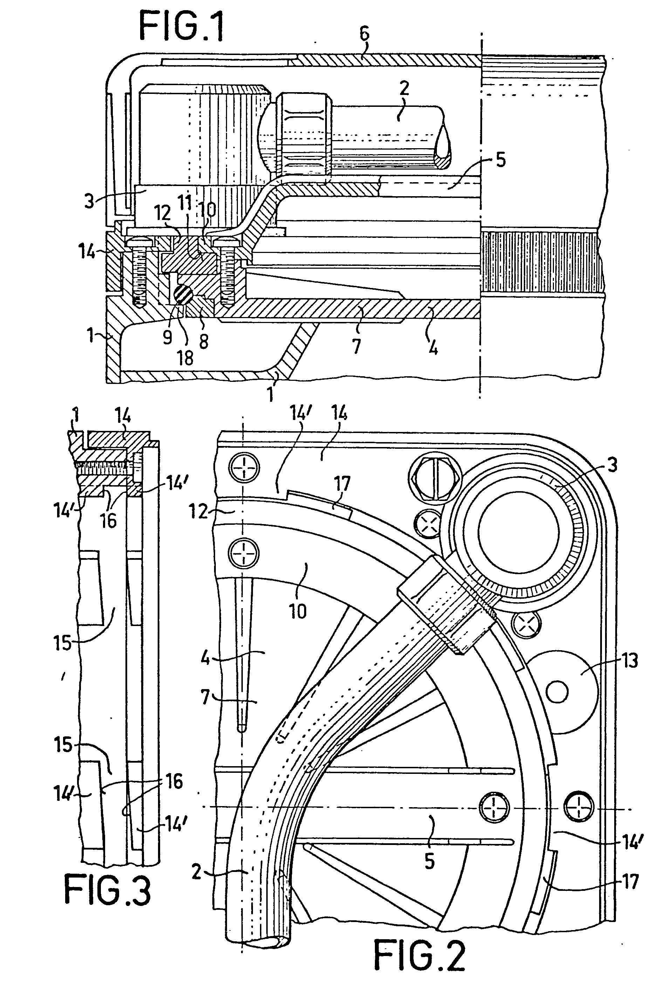

Das Gehäuse besteht im wesentlichen aus einem topfartigen Unterteil 1 mit mehrerenn Zu- bzw. Abflüssen in Form von Schläuchen 2 und zugehörigen Steckarmaturen 3, einem lösbaren Deckel 4 mit quer angeordnetem Handgriff 5 und einer den Deckel 4 überragenden, lösbar angebrachten Haube 6, auf deren Darstellung in Fig. 2 verzichtet ist.

Die Deckelplatte 7 des Deckels 4 hat in ihrem unteren Randbereich einen angeschraubten Haltering 8 zur Bildung einer Umfangsnut für die Aufnahme eines Dichtungsringes 9 in Form eines O-Ringes. Von oben ist auf die Deckelplatte 7 ein Haltering 10 aufgeschraubt, in den der Handgriff 5 einstückig übergeht. Der Haltering 10 dient zur Bildung einer Umfangsnut 11, in dem ein verdrehbarer Druckring 12 gelagert ist. Dieser Druckring 12 kann durch ein bei 13 einzusetzendes Zahnradritzel über eine nicht näher dargestellte Verzahnung am Aussenumfang des Druckringes 12 verdreht werden. Das Zahnritzel ist aufsteckbar und oben mit einer Handhabe versehen; es wird abgezogen, um Unbefugten eine Verdrehung des Druckringes 12 zu verwehren.

Der in Fig. 3 im Teilschnitt wiedergegebene Aussenrahmen 14 in Ringform, der auch zur Halterung und Zentrierung der Haube 6 dient, hat an seinem inneren Umfang Vorsprünge 14', und zwar je paarweise übereinander befindliche, die zwischen sich einen Spalt 15 einschliessen, der nach oben und unten durch gleichsinnig ansteigende Schrägflächen 16 begrenzt ist.

Entsprechend schräg verlaufende, vorspringende Nocken 17 hat der Druckring 12 in der Weise, dass die Nocken 17 in den Spalt 15 hineingezogen werden können, wenn der Druckring 12 verdreht wird.

Zum Aufsetzen des Deckels 4 und Verschliessen des Filtergehäuses wird der Deckel 4 so verdreht, dass seine Nocken 17 durch die obenliegende Schrägfläche 16 erfasst und nach unten gedrückt werden, wobei der Dichtungsring 9 angepresst wird. Zum Abnehmen und Lösen des Deckels 4 wird dieser in die entgegengesetzte Richtung verdreht, wobei die Nocken 17 auf der unteren Schrägfläche 16 in der Weise gleiten, dass eine axiale Abhebebewegung des Deckels 4 eintritt.

Um eine gute Abdichtung zu erreichen, liegt der Dichtungsring 9 auf einer Stufe 18 am Unterteil 1 auf.

Vorteilhaft ist auch die Vereinigung des Handgriffes 5 mit dem Haltering 10. Es ist daher nur erforderlich, den Haltering 10 durch Schrauben oder dgl. zu befestigen. Es erübrigen sich also besondere Befestigungsmittel für den Handgriff 5.

## Patentansprüche

1. Gehäuse für Aquarienfilter, das druckfest ausgeführt und mit einem lösbar angebrachten Deckel (4) versehen ist, der einen ihn umschliessenden Ring (Druckring 12) aufweist, welcher gegenüber dem Gehäuseunterteil (1) verdrehbar ist und durch Verdrehen mittels Schrägflächen (16) zur Erzielung eines Dichtungsdruckes eine Axialbewegung des Deckels (4) bewirkt, dadurch gekennzeichnet, dass der Ring (12) mit einer Verzahnung versehen ist, in die ein Ritzel eingreift, das auswechselbar, leicht lösbar und mit einer Handhabe ausgestattet ist.

2. Gehäuse nach Anspruch 1, dadurch gekennzeichnet, dass der Druckring (12) am Aussenumfang des Deckels (4) befindlich verdrehbar in einer Umfangsnut (11) gelagert ist.

3. Gehäuse nach Anspruch 2, dadurch gekennzeichnet, dass die Umfangsnut (11) nach oben hin durch einen oberen lösbaren Haltering (10) begrenzt ist.

4. Gehäuse nach Anspruch 3, dadurch gekennzeichnet, dass an dem oberen Haltering (10) die Enden eines quer zum Deckel (4) verlaufenden Handgriffes (5) befestigt sind, wobei der Handgriff vorzugsweise einstückig in den oberen Haltering (10) übergeht.

5. Gehäuse nach Anspruch 1, dadurch gekennzeichnet, dass der Dichtungsring (9) in seinem unteren Teil an einem unteren lösbaren Haltering (8) anliegt.

6. Gehäuse nach Anspruch 1, dadurch gekennzeichnet, dass zusätzlich zu den den Dichtungsdruck erzeugenden Schrägflächen (16) Schrägflächen vorgesehen sind, die zum Abheben des Deckels (4) dienen.

7. Gehäuse nach Anspruch 7, dadurch gekennzeichnet, dass am äusseren Umfang des Deckels bzw. des Druckringes (12) Nocken (17) vorgesehen sind, die im montierten Zustand des Deckels (4) im Spalt (15) zwischen den beiden Schrägflächen (16) angeordnet sind, die im wesentlichen parallel zueinander verlaufen.

8. Gehäuse nach Anspruch 1 und 7, dadurch gekennzeichnet, dass sich die Schrägflächen (16) am inneren Umfang eines die seitlich oben gelegenen Kanten des Unterteils (1) bildenden Aussenrahmens (14) befinden, auf dem sich, vorzugsweise auch zentriert, eine Abdeckhaube (6) abstützt, die das Gehäuse nach oben hin abschliesst und überdeckt.

## Claims

1. Housing for aquarium filters which is of a pressure-resistant construction and is provided with a detachably mounted cover (4) having a ring (pressure ring 12) enclosing said cover, which ring is rotatable relative to the portion (1) of the housing and effects an axial movement of the cover (4) by rotating by means of inclined faces (16) to achieve a sealing pressure, characterised in that the ring (12) is provided with teeth which engage a pinion which is interchangeable, is easily detachable, and is provided with a handle.

2. Housing according to claim 1, characterised in that the pressure ring (12) is disposed on the outer periphery of the cover (4) and is rotatably mounted in a peripheral groove (11).

3. Housing according to claim 2, characterised in that the peripheral groove (11) is limited upwardly by an upper, detachable retaining ring (10).

4. Housing according to claim 3, characterised in that the ends of a handle (5), which extends transversely to the cover (4), are secured to the upper retaining ring (10), the handle preferably passing integrally into the upper retaining ring (10).

5. Housing according to claim 1, characterised in that the sealing ring (9), in its lower portion, abuts against a lower, detachable retaining ring (8).

6. Housing according to claim 1, characterised in that, in addition to the inclined faces (16) which produce the sealing pressure, inclined faces are provided which serve to remove the cover (4).

7. Housing according to claim 6, characterised in that cams (17) are provided on the outer periphery of the cover, or of the pressure ring (12) respectively, and, when the cover (4) is in its mounted position, said cams are disposed in the gap (15) between the two inclined faces (16) which extend substantially parallel to each other.

8. Housing according to claims 1 and 7, characterised in that the inclined faces (16) are disposed on the inner periphery of an external frame (14) forming the upper lateral edges of the lower portion (1), and a covering hood (6) is supported on said external frame, and is preferably also centred thereon, said covering hood upwardly sealing and covering the housing.

## Revendications

1. Boîtier pour filtre d'aquarium, qui est réalisé de manière à résister à la pression et qui est muni d'un couvercle (4) monté de manière amovible et présentant un anneau qui en fait le tour (anneau de serrage 12), lequel couvercle peut tourner par rapport à la partie inférieure (1) du boîtier et, en tournant, provoque aux moyens de surfaces obliques (16) un déplacement axial du couvercle (4) en vue de réaliser une pression donnant de l'étanchéité, caractérisé en ce que l'anneau (12) est muni d'une denture dans laquelle engrène un pignon qui peut être échangé, qui est détachable facilement et qui est muni d'une poignée.

2. Boîtier selon la revendication 1, caractérisé en ce que l'anneau de pression (12) qui est situé à la périphérie extérieure du couvercle (4), est monté à rotation dans une gorge périphérique (11).

3. Boîtier selon la revendication 2, caractérisé en ce que la gorge périphérique (11) est délimitée vers le haut par un anneau de blocage supérieur (10) amovible.

4. Boîtier selon la revendication 3, caractérisé en ce que les extrémités d'une poignée (5) s'étendant transversalement au couvercle (4) sont fixées à l'anneau supérieur de blocage (10), la poignée se rattachant, de préférence d'une pièce, à l'anneau supérieur de blocage (10).

5. Boîtier selon la revendication 1, caractérisé en ce que l'anneau d'étanchéité (9) porte par sa partie inférieure contre un anneau inférieur de blocage (8) amovible.

6. Boîtier selon la revendication 1, caractérisé en ce qu'en plus des surfaces obliques (16) produisant la pression donnant l'étanchéité, sont prévues des surfaces obliques qui servent à soulever le couvercle (4).

7. Boîtier selon la revendication 6, caractérisé en ce que sur la périphérie extérieure du couvercle ou de l'anneau de pression (12) sont prevues des parties saillantes (17) qui, quand le couvercle (4) est monté, sont disposées dans l'intervalle compris entre les deux surfaces obliques (16) qui sont sensiblement parallèles entre elles.

8. Boîtier selon la revendication 1 et 7, caractérisé en ce que les surfaces obliques (16) se trouvent sur la périphérie intérieure d'un cadre extérieur (14) qui forme les bords situés latéralement vers le haut de la partie inférieure (1) et sur lequel s'appuie, de préférence également de façon centrée, un capot (6), qui ferme et recouvre le boîtier vers le haut.

# FIG.1

# FIG.3

# FIG.2